# EUROPEAN PATENT APPLICATION

(11) **EP 1 016 893 A1**
(43) Date of publication of application: **05.07.2000**
(21) Application number: 98905714.6
(22) Date of filing: 02.03.1998
(51) Int. Cl.: G02F 1/1333

(54) **STAINPROOF LIQUID CRYSTAL DISPLAY**

(30) Priority: 04.03.1997 JP 4884197
(71) Applicant: KABUSHIKI KAISHA PILOT, Tokyo 141-0031 (JP)
(72) Inventor: ABE, Yutaka, Hiratsuka-shi, Kanagawa 254-0821 (JP); IKEDA, Masahiko, Hiratsuka-shi, Kanagawa 254-0024 (JP); SATO, Morio, Fujisawa-shi, Kanagawa 252-0821 (JP)
(74) Representative: Waldren, Robin Michael
(86) International application number: JP9800843
(87) International publication number: WO9839683

(57) **Abstract**

A liquid crystal display which comprises at least a liquid crystal dispersion polymer layer (2) in which liquid crystal is micro-dispersed in a polymer matrix and a surface protective layer (1) is built up on a conductive layer (6). The angle of contact of the surface protective layer (1) with respect to water is not less than 80° and the volume resistivity of the surface protective layer (1) is not less than 10¹³ Ω.cm at a temperature of 20°C and a relative humidity of 90%.

## Description

### Technical Field

The present invention relates to a liquid crystal display device, more specifically to a liquid crystal display device having an antifouling ability.

### Background Art

In an external charge type liquid crystal display device disclosed in Japanese Patent Application Laid-Open No. Hei 5-224182 among liquid crystal display devices, a transparent insulator layer is provided on a liquid crystal-dispersed polymer layer in which liquid crystal is finely dispersed in a polymer matrix, so that the liquid crystal-dispersed polymer layer can be prevented from being scratched. However, the surface of the transparent insulator layer is not subjected to antifouling treatment, and therefore while contacting a conductive member with the surface of the display device to apply an electric field to the liquid crystal display device, the surface of the display device is fouled by a conductive component (for example, conductive carbon black and the like) contained in the conductive member, so that the problems that the contour of a displayed image or written lines becomes indistinct and the memory performance is reduced are caused in some cases.

On the other hand, a handwriting liquid crystal board set disclosed in Japanese Patent Application Laid-Open No. Hei 5-281530 is subjected to antifouling treatment in which a writing member or an erasing member is impregnated with oil such as an insulating oil, a silicone oil and a fluorine-containing oil or covered with a polymer film, and therefore the problems described above are solved for the present.

However, when writing on a display screen of a hand-writable liquid crystal board set by means of a writing member or erasing by means of an erasing member, a hand and fingers touch or rub the display screen, so that fouling matters such as sebum and sweat on a hand and cosmetics stick to the display screen to foul the display screen in a certain case.

In the liquid crystal board set for handwritting described above, writing and erasing can be carried out without using a writing member and an erasing member. For example, writing and erasing can be carried out as well directly by using fingers. When it is planed to provide a hand-writable liquid crystal board set as a toy to the market, it is more interesting and surprising as a toy that an image can be written and erased by touching the display screen directly with fingers without using a writing member and an erasing member. Accordingly, it is considered to exert a great influence on the added value as a commercial article whether or not writing and erasing can be carried out by "finger-writing".

However, if writing and erasing are repeatedly carried out directly with fingers, fouling goes on rapidly, and the degree thereof grows large. When the fouling matters have a low electric resistance, caused is the problem that an electrical resistivity on the surface of the display device screen is reduced and the contour of a written image becomes indistinct.

When the surface of a display device screen becomes hydrophilic due to fouling matters, caused as well are the problems that moisture is liable to stick on the surface of the display device screen particularly under high humidity to allow an electrical resistivity on the surface of the display device screen to be reduced and the contour of a written image becomes indistinct.

Further, even when fouling matters do not stick on the surface of a display device screen, repeated use produces fine scratches on the surface of the display device screen in some cases. As a result, a contact angle of the surface of the display device screen to water is reduced, and the same problems as described above are brought about.

In order to solve these problems, it can be considered to employ a method in which the surface of a display device screen is subjected to antifouling treatment, but there still remains the problem that the production steps increase because of the antifouling treatment provided to a transparent insulator layer and the method is rather expensive in terms of a cost.

The present invention has been made in order to solve the conventional problems described above, and an object thereof is to provide a liquid crystal display device having an antifouling ability in which moisture is hard to stick on the display screen and fouling matters such as sebum and sweat on a hand are hard to stick to the display screen as well in repeated use or even if writing and erasing are repeated on the display screen directly with fingers and in which even if fouling matters stick, they can easily be removed by dry wiping or wet wiping and even if the surface of the display device screen is scratched by repeated use, moisture is hard to stick.

### Disclosure of the Invention

In order to achieve the object described above, the liquid crystal display device having an antifouling ability of the present invention is characterized by comprising at least a liquid crystal-dispersed polymer layer in which liquid crystal is finely dispersed in a polymer matrix and a surface protective layer, each of which is laminated in order on a conductive layer, wherein said surface protective layer has a contact angle of 80° or more to water and a volume resistivity of 10¹³ Ω·cm or more at a temperature of 20°C and a relative humidity of 90%.

### Brief Description of the Drawings

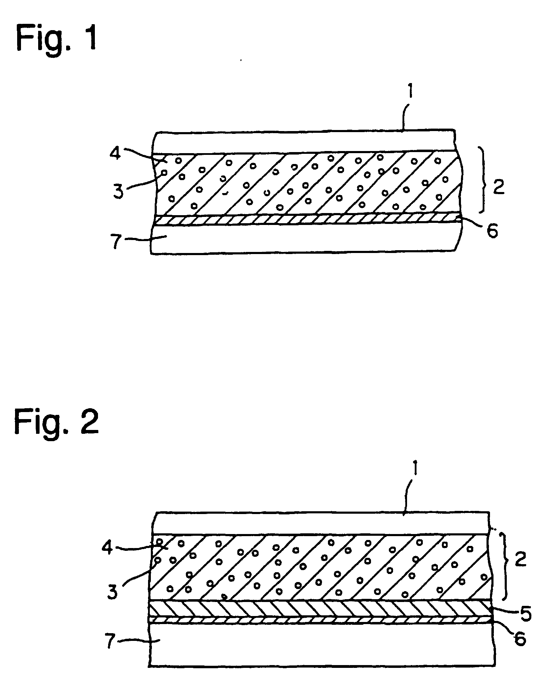

Fig. 1 is a longitudinal cross section showing one example of the liquid crystal display device having an antifouling ability of the present invention, and Fig. 2 is a longitudinal cross section showing another example of the liquid crystal display device having an antifouling ability of the present invention.

### Best Mode for Carrying Out the Invention

The embodiment of the liquid crystal display device having an antifouling ability according to the present invention shall be explained below in detail.

The preferred liquid crystal display device of the present invention comprises mainly a transparent high electric resistance layer having a volume resistivity of 10¹³ Ω·cm or more at a temperature of 20°C and a relative humidity of 90 %. a liquid crystal-dispersed polymer layer in which liquid crystal is finely dispersed in a polymer matrix and a volume resistivity is 10¹³ Ω·cm or more at a temperature of 20°C and a relative humidity of 90 % and a surface protective layer having a contact angle of 80° or more to water and a volume resistivity of 10¹³ Ω·cm or more at a temperature of 20°C and a relative humidity of 90 %, each of which is laminated in order on a conductive layer.

The conductive layer of the liquid crystal display device may be either transparent or opaque and may be any layer as long as it has a surface resistance of 10⁷ Ω/□ or less. Practically, the layer is obtained by providing the surface of a substrate with conductivity by aluminum, titanium, chromium, tin, rhodium, gold, stainless steel, titanium nitride, nickel-chromium, aluminum-chromium or indium tin oxide. The substrate described above is intended to hold the conductive layer and includes, to be specific, paper, cloth, non-woven fabric, and plastic films of polyethylene terephthalate, polyethylene naphthalate, polypropylene, polyethylene, polyvinyl chloride, polysulfone, polyphenylene oxide, ionomer, polyimide and polycarbonate and the like. However, when the conductive layer itself is a metal film, such a substrate is not specifically required.

The liquid crystal-dispersed polymer layer of the liquid crystal display device is obtained by dispersing liquid crystal in a polymer matrix. A process for dispersing liquid crystal in a polymer matrix includes a phase separation process of evaporating a common solvent for a polymer/liquid crystal (common solvent casting process), a polymerization phase separation process in which a polymer precursor in a liquid crystal/polymer precursor mixture is polymerized by light or heat, a melting/cooling phase separation process in which liquid crystal and a polymer are cooled from a heated and molten state and a process in which liquid crystal that is emulsion-dispersed in an aqueous resin is applied and dried to disperse in a polymer matrix, and they can suitably be used.

The polymer capable of being used for this liquid crystal-dispersed polymer layer may be any one as long as it is a polymer which is hard to be miscible with the liquid crystal, and to be specific, it includes vinyl resins such as chlorinated polyethylene, polystyrene and acryl resins, vinylidene chloride resins, polyvinyl acetal resins, cellulose resins, ionomers, polyamide, polycarbonate, styrene-butadiene rubber, chlorosulfonated polyethylene, polyester and epoxy resins. In this case, the polyvinyl acetal resins include polyvinyl formal, polyvinyl acetal and polyvinyl butyral and the like.

In particular, polymers having cross-linking structure (hereinafter referred to as a cross-linked polymer) are preferred as the polymer constituting the liquid crystal-dispersed polymer layer. If the cross-linked polymer is used, the cross-linked polymer is not miscrible at all with the liquid crystal even when the liquid crystal display device of the present invention is left in a high temperature state, and the stable liquid crystal-finely dispersed structure can be maintained. This makes it possible to obtain a liquid crystal sheet having durability in which performances are not deteriorated with the passage of time.

The cross-linked polymer includes, for example, cross-linked polymers obtained by mixing and reacting polymers having functional groups such as a double bond, hydroxy, carboxy, epoxy, isocyanate, amino and chlorosulfone with cross-linking agents which react with functional groups and cross-linked polymers obtained by mixing and reacting polymers having the functional groups described above with reactive polymers.

The cross-linking agents used for the reaction described above include isocyanate compounds, organic peroxides, amine compounds, epoxy compounds, dicarboxylic acids or carboxylic anhydrides, formaldehyde, dialdehydes, diols, bisphenols and photo cross-linking agents (photo polymerization initiators), and the reactive polymers include phenol resins, amino resins, polyols and epoxy resins.

The preferred cross-linked polymer includes cross-linked polymers obtained by reacting di- or polyisocyanates with polymers such as polyvinyl acetal resins, epoxy resins, acryl resins having functional groups such as a hydroxy group and a carboxy group, and polyester resins. More preferred cross-linked polymers are cross-linked polymers obtained by reacting di- or polyisocyanates with polyvinyl acetal resins. In this case, the polyvinyl acetal resins are polyvinyl formal, polyvinyl acetal, polyvinyl butyral and the like.

The liquid crystal used for the liquid crystal-dispersed polymer layer is preferably nematic liquid crystal having a positive dielectric anisotropy. The liquid crystal phase has preferably a temperature range of -10 to 100°C in terms of practical use and a birefringence index Δn of 0.2 or more in order to display vividly the recorded image.

The liquid crystal-dispersed polymer layer of the liquid crystal display device has preferably a volume resistivity of 10¹³ Ω·cm or more at a temperature of 20°C and a relative humidity of 90 % (hereinafter abbreviated as 90 % RH). This makes the contour of the recorded image vivid even under an environment of a temperature of 20°C and 90 % RH and improves the memory performance, the erasability and the durability. The reason therefor is that applied static charge becomes hard to move and attenuate and therefore is maintained for a long time, so that even if time passes, the contour of the recorded image keeps a vivid condition without becoming indistinct. Further, applied static charge becomes hard to move and attenuate in the direction of the front and back of the display screen, and therefore the erasability goes up as well. However, in the layer having a volume resistivity of less than 10¹³ Ω·cm, applied static charge is easy to move and attenuate on the surface and in the direction of the front and back of the display screen, and therefore the static charge disappears and attenuates as time passes, so that the static charge becomes imbalanced on the surface and in the direction of the front and back of the display screen. As a result, the contour of the recorded image, the memory performance and the erasability are deteriorated.

The surface protective layer of the liquid crystal display device is composed of a transparent and water-repellent polymer having a high electric resistance. That is, the surface protective layer has a contact angle of 80° or more to water and a volume resistivity of 10¹³ Ω·cm or more at a temperature of 20°C and 90 % RH. If the surface protective layer has a contact angle of less than 80° to water, it can not have a satisfactory water-repellence, and moisture and fouling matters such as sebum and sweat on a hand and cosmetics are liable to stick on the surface of the display device screen. On the other hand, if the surface protective layer has a contact angle of 80° or more to water, moisture and fouling matters can easily be removed by dry wiping or wet wiping even if they stick on the surface of the display device screen. Further, even if the surface of the display device screen is scratched by repeated use, it does not become hydrophilic, and moisture is hard to stick on the surface even under an environment of high humidity. If the surface protective layer having a volume resistivity of less than 10¹³ Ω·cm at a temperature of 20°C and 90 % RH is used, problems on the performances are caused for the same reasons as in the case of the liquid crystal-dispersed polymer layer described above, and the practical liquid crystal display device is not obtained.

Materials constituting the surface protective layer include, for example, silicone resins, thermosetting silicone resins, photosetting silicone resins, fluororesin, thermosetting fluororesins, photosetting fluororesins, and polymers containing a silicone or fluorine component at a principal chain part, a side chain part or a terminal part. The surface protective layer is obtained by laminating a film comprising the materials described above with a bond or adhesive, applying and drying a solution of a material having the physical properties described above or applying a solution of a reactive material and then reacting it.

Further, a transparent high electric resistance layer is preferably provided between the conductive layer and the liquid crystal-dispersed polymer layer, and the volume resistivity thereof is preferably 10¹³ Ω·cm or more at a temperature of 20°C and 90 % RH. Because of the surer prevention of movement and attenuation of static charge applied on the display device screen, this transparent high electric resistance layer improves the performances such as the vividness of the contour of the recorded image, the memory performance and the erasability. If the layer having a volume resistivity of less than 10¹³ Ω·cm at a temperature of 20°C and 90 % RH is used, problems on the performances are caused for the same reasons as in the case of the liquid crystal-dispersed polymer layer described above, and such a layer is not practical.

Polymers used for the transparent high electric resistance layer include vinyl resins such as chlorinated polyethylene, polystyrene and acryl resins, vinylidene chloride resins, polyvinyl acetal resins, cellulose resins, ionomers, polyamide, polycarbonate, styrenebutadiene rubber, chlorosulfonated polyethylene. polyester and epoxy resins. In this case, the polyvinyl acetal resins are polyvinyl formal, polyvinyl acetal, polyvinyl butyral and the like.

Further, the following cross-linked polymers can also be used as the polymer for the transparent high electric resistance layer. They include, for example, cross-linked polymers obtained by mixing and reacting polymers having functional groups such as a double bond, hydroxy, carboxy, epoxy, isocyanate, amino and chlorosulfone with cross-linking agents which react with functional groups and cross-linked polymers obtained by mixing and reacting polymers having the functional groups described above with reactive polymers.

The cross-linking agents used for the reaction described above include isocyanate compounds, organic peroxides, amine compounds, epoxy compounds, dicarboxylic acid or carboxylic anhydrides, formaldehyde, dialdehydes, diols, bisphenols and photo cross-linking agents (photo polymerization initiators), and the reactive polymers include phenol resins, amino resins, polyols and epoxy resins.

The preferred cross-linked polymer includes cross-linked polymers obtained by reacting di- or polyisocyanates with polymers such as polyvinyl acetal resins, epoxy resins, acryl resins having functional groups such as a hydroxy group and a carboxy group and polyester resins. More preferred cross-linked polymers are cross-linked polymers obtained by reacting di- or polyisocyanates with polyvinyl acetal resins. In this case, the polyvinyl acetal resins are polyvinyl formal, polyvinyl acetal, polyvinyl butyral and the like.

The transparent high electric resistance layer can be obtained by applying a solution of a material for the layer or applying and reacting a solution of a reactive material. Or, it can be obtained as well by laminating a film having a high electric resistance with a bond or adhesive.

The transparent high electric resistance layer has a thickness falling suitably in a range of 0.4 to 10 µm.

As a example of the reactive materials, there are combinations of, for example, a di- or polyisocyanate compound for the cross-linking agent with polyvinyl alkylal, an epoxy resin, a carboxyl group-containing acryl resin or a polyester resin for the compound reacting with the above cross-linking agent. Further, the films having a high electric resistance include films of polyethylene terephthalate, polyethylene naphthalate, polypropylene, polyethylene, polyvinyl chloride, polysulfone, polyphenylene oxide, ionomer and polycarbonate.

### Examples

The examples of the liquid crystal display device having an antifouling ability according to the present invention shall be explained in detail with reference to drawings.

### Example 1

A solution comprising the following components was applied as a liquid crystal-dispersed polymer layer 2 on a conductive layer 6 which was an aluminum-deposited layer (#125 METALLUMY TS; aluminum-deposited film which uses a polyethylene terephthalate film as a substrate 7: manufactured by TOYO METALLIZING Co., Ltd.) so that the dried film thickness thereof was 7 µm, and then it was dried and cured:

| | |
|---|---|
| 10 % solution of S-LECK KS-1 (polyvinyl acetal resin: manufactured by Sekisui Chemical Co., Ltd.) in ethyl acetate | 2.1 g |
| TAKENATE D110N (polyisocyanate: manufactured by Takeda Chemical Industries, Ltd.) | 0.42 g |
| E44 (nematic liquid crystal: manufactured Merck AG.) | 0.23 g |

Further, a solution comprising the following components was applied as a surface protective layer 1 on the coated film described above so that the dried film thickness thereof was 3 µm, and then it was dried and cured to prepare the liquid crystal display device of the present example as shown in Fig. 1:

| | |
|---|---|
| Cimac US-380 (acryl·silicone coating agent: manufactured by Toagosei Co., Ltd.) | 4.0 g |
| CORONATE HX (polyisocyanate: manufactured by Nippon Polyurethane Industry Co., Ltd.) | 0.27 g |

### Example 2

A solution comprising the following components was applied as a transparent high electric resistance layer 5 on a conductive layer 6 which was an aluminum-deposited layer (#125 METALLUMY TS; aluminum-deposited film which uses a polyethylene terephthalate film as a substrate 7: manufactured by TOYO METALLIZING Co., Ltd.) so that the dried film thickness thereof was 2.5 µm, and then it was dried and cured:

| | |
|---|---|
| 10 % solution of S-LECK KS-1 (polyvinyl acetal resin: manufactured by Sekisui Chemical Co., Ltd.) in ethyl acetate | 9.0 g |
| TAKENATE D110N (polyisocyanate: manufactured by Takeda Chemical Industries, Ltd.) | 0.4 g |

A solution comprising the following components was applied as a liquid crystal-dispersed polymer layer 2 on the coated film described above so that the dried film thickness thereof was 7 µm, and then it was dried and cured:

| | |
|---|---|
| 10 % solution of S-LECK KS-1 (polyvinyl acetal resin: manufactured by Sekisui Chemical Co., Ltd.) in ethyl acetate | 2.1 g |
| TAKENATE D110N (polyisocyanate: manufactured by Takeda Chemical Industries, Ltd.) | 0.42 g |
| E44 (nematic liquid crystal: manufactured Merck AG.) | 0.23 g |

Further, a solution comprising the following components was applied as a surface protective layer 1 on the coated film described above so that the dried film thickness thereof was 3 µm, and then it was dried and cured to prepare the liquid crystal display device of the present example as shown in Fig. 2:

| | |
|---|---|
| Cimac US-380 (acryl·silicone coating agent: manufactured by Toagosei Co., Ltd.) | 4.0 g |
| CORONATE HX (polyisocyanate: manufactured by Nippon Polyurethane Industry Co., Ltd.) | 0.27 g |

### Example 3

A conductive layer 6, a transparent high electric resistance layer 5 and a liquid crystal-dispersed polymer layer 2 were formed in the same manner as in Example 2. Further, a solution comprising the following components was applied thereon as a surface protective layer 1 so that the dried film thickness thereof was 3 µm, and then it was dried and cured to prepare the liquid crystal display device of the present example:

| | |
|---|---|
| X-22-8004 (silicone based film-forming agent: manufactured by Shin-etsu Chemical Co., Ltd.) | 4.0 g |
| TAKENATE D110N (polyisocyanate: manufactured by Takeda Chemical Industries, Ltd.) | 0.18 g |

### Example 4

A conductive layer 6, a transparent high electric resistance layer 5 and a liquid crystal-dispersed polymer layer 2 were formed in the same manner as in Example 2. Further, a solution comprising the following components was applied thereon as a surface protective layer 1 so that the dried film thickness thereof was 3 µm, and then it was dried and cured to prepare the liquid crystal display device of the present example:

| | |
|---|---|
| Sefral Coat A-201TB (solvent-soluble type fluororesin for paint: manufactured by Central Glass Co., Ltd.) | 4.0 g |
| CORONATE HX (polyisocyanate: manufactured by Nippon Polyurethane Industry Co., Ltd.) | 0.34 g |

### Comparative Example 1

A conductive layer 6, a transparent high electric resistance layer 5 and a liquid crystal-dispersed polymer layer 2 were formed in the same manner as in Example 2. Further, Tetoron Film F (polyethylene terephthalate film: manufactured by Teijin, Ltd.) of 9 µm was laminated thereon as a surface protective layer 1 with an adhesive to prepare a liquid crystal display device of the present comparative example.

### Comparative Example 2

A conductive layer 6, a transparent high electric resistance layer 5 and a liquid crystal-dispersed polymer layer 2 were formed in the same manner as in Example 2. Further, Tedler Film TTR05SG2 (polyvinyl fluoride film: manufactured by Du Pont Co., Ltd.) of 12 µm was laminated thereon as a surface protective layer 1 with an adhesive to prepare a liquid crystal display device of the present comparative example.

### Comparative Example 3

A conductive layer 6, a transparent high electric resistance layer 5 and a liquid crystal-dispersed polymer layer 2 were formed in the same manner as in Example 2. Further, an aqueous solution of GF-256 (polysiloxane graft polymer dispersion in water: manufactured by Nippon Shokubai Co., Ltd.) was applied thereon as a surface protective layer 1 so that the dried film thickness thereof was 3 µm, and then it was dried to prepare a liquid crystal display device of the present comparative example.

The liquid crystal display devices prepared in the examples and the comparative examples described above were evaluated for the following items.

In measuring the volume resistivities, the same layers as the surface protective layers in the respective examples and comparative examples were laminated directly on electrode plates and measured.

### (1) Water repellency

Contact angles of the surfaces of the respective liquid crystal display devices to water were determined by means of an image-processing type contact angle meter (CA-X: manufactured by Kyowa Interface Science Co., Ltd.).

### (2) Volume resistivity

The volume resistivities of the respective surface protective layers which was conditioned to a relative humidity of 90 % at 20°C were determined by means of a digital ULTRA-HIGH RESISTANCE METER (R8340A: manufactured by Advantest Corp.) and an insulation resistance measuring specimen chamber (TR42: manufactured by Advantest Corp.).

### (3) Antifouling ability

Th surfaces of the respective liquid crystal display devices were fouled by synthetic sebum comprising the following components and then left standing under conditions of 20°C and 90 % RH. Then, a voltage of 300 V was applied to the respective liquid crystal display devices from a DC power source to display images, and the condition of the liquid crystal display devices was observed with the passage of time.

| | |
|---|---|
| Coconard RK (triglyceride: manufactured by Kao Corp.) | 3.4 g |
| Deodorized lanolin A (wax ester: manufactured by NODA WAX Co., Ltd.) | 1.3 g |
| Squalane (tetramethyltetracosane) | 1.0 g |
| Oleic acid | 1.0 g |
| Urea | 0.8 g |
| Sodium lactate | 0.8 g |
| Water | 1.7 g |

- ○: Contour of image is clearly held without becoming indistinct
- △: Contour of image becomes indistinct a little
- X: Contour of image becomes indistinct to a large extent, and the image becomes indistinguishable

### (4) Memory performance

A voltage of 300 V was applied on the respective liquid crystal display devices which was conditioned to 90 % RH at 20°C from a DC power source to display images, and then they were left standing under conditions of 20°C and 90 % RH. Then, a density difference between the image part and the non-image part was determined by means of a reflection density-meter (RD-915 type: manufactured by Macbeth Co., Ltd.) to evaluate a holding time of the image.
- ○: Difference in O. D. value (optical density) between image part and non-image part is 0.4 or more, and holding time of image is 30 minutes or more.
- △: Difference in O. D. value between image part and non-image part is 0.4 or more, and holding time of image is 10 minutes or more and less than 30 minutes.
- X: Difference in O. D. value between image part and non-image part is 0.4 or more, and holding time of image is less than 10 minutes.

The evaluation results are shown in Table 1.

**Table 1**

| | | Water repellency (contact angle) | Volume resistivity ( ·cm) | Antifouling ability | Memory performance |
|---|---|---|---|---|---|
| Example | 1 | 103.2 | 4.1 × 10¹⁵ | ○ | △ |
| | 2 | 103.2 | 4.1 × 10¹⁵ | ○ | ○ |
| | 3 | 102.2 | 2.2 × 10¹⁴ | ○ | ○ |
| | 4 | 80.7 | 4.3 × 10¹³ | △ | ○ |
| Comparative Example | 1 | 73.6 | 6.5 × 10¹⁷ | X | ○ |
| | 2 | 76.3 | 5.2 × 10¹⁴ | X | ○ |
| | 3 | 83.3 | 7.1 × 10⁸ | Δ | X |

### Industrial Applicability

The liquid crystal display device of the present invention having an antifouling ability has a high water repellency of a surface protective layer, so that moisture and fouling matters are hard to stick on the surface of the display device even under a high humidity environment, and the contour of the written image does not become indistinct. Further, since the surface protective layer has a high volume resistivity, it plays a part as a conventional transparent insulator layer as well as a conventional transparent insulator layer and antifouling layer. Accordingly, the structure of the liquid crystal display device can be simplified, and the whole thickness of the element can be reduced, so that an image can be displayed at a lower voltage than ever. The liquid crystal display device of the present invention can be applied to a hand-writable liquid crystal board set, and even if repeatedly used or repeatedly written and erased on the display screen directly with fingers, the display screen is hard to be fouled. The contour of the displayed image and the memory performance for the image are held for a long period of time, and the added value as a hand-writable liquid crystal board set can be elevated.

## Claims

1. A liquid crystal display device having an antifouling ability, comprising at least a liquid crystal-dispersed polymer layer in which liquid crystal is finely dispersed in a polymer matrix and a surface protective layer, each of which is laminated in order on a conductive layer, wherein said surface protective layer has a contact angle of 80° or more to water and a volume resistivity of 10¹³ Ω·cm or more at a temperature of 20°C and a relative humidity of 90 %.

2. The liquid crystal display device having an antifouling ability as described in claim 1, comprising primarily a transparent high electric resistance layer, a liquid crystal-dispersed polymer layer in which liquid crystal is finely dispersed in a polymer matrix and a surface protective layer, each of which is laminated in order on a conductive layer.

3. The liquid crystal display device having an antifouling ability as described in claim 2, wherein said transparent high electric resistance layer has a volume resistivity of 10¹³ Ω·cm or more at a temperature of 20°C and a relative humidity of 90 %.

4. The liquid crystal display device having an antifouling ability as described in claim 1 or 2, wherein said liquid crystal-dispersed polymer layer has a volume resistivity of 10¹³ Ω·cm or more at a temperature of 20°C and a relative humidity of 90 %.

5. The liquid crystal display device having an antifouling ability as described in claim 1 or 2, wherein said polymer matrix comprises a cross-linked polymer obtained by reacting di- or polyisocyanate with a polyvinyl acetal resin.

6. The liquid crystal display device having an antifouling ability as described in claim 1 or 2, wherein said surface protective layer comprises a material selected from the group consisting of silicone resins, thermosetting silicone resins, photosetting silicone resins, fluororesins, thermosetting fluororesins, photosetting fluororesins and polymers containing a silicone or fluorine component at a principal chain part, a side chain part or a terminal part.

7. The liquid crystal display device having an antifouling ability as described in claim 1 or 2, wherein said liquid crystal is nematic liquid crystal having a positive dielectric anisotropy and has a birefringence index of 0.2 or more.
